# EUROPÄISCHE PATENTSCHRIFT

(11) **EP 0 936 443 B1**
(45) Veröffentlichungstag und Bekanntmachung des Hinweises auf die Patenterteilung: **02.07.2003**
(21) Anmeldenummer: 98121590.8
(22) Anmeldetag: 19.11.1998
(51) Int. Cl.: G01D 5/22, G01B 7/30, G01B 7/02

(54) **Anordnung zur zweidimensionalen, berührungslosen Positionsbestimmung eines Messobjektes**
Device for two-dimensional contact-free determination of the position of an object
Dispositif de détection sans contact en deux dimensions de la position d'un objet

(30) Priorität: 12.02.1998 DE 19805783
(43) Veröffentlichungstag der Anmeldung: 18.08.1999
(73) Patentinhaber: TYCO Electronics Logistics AG, 9323 Steinach (CH)
(72) Erfinder: Hoffelder, Bernd, 67354 Römerberg (DE); Theel, Thomas, 67454 Hassloch (DE)
(74) Vertreter: Klunker . Schmitt-Nilson . Hirsch

(56) Entgegenhaltungen:
- DE-A- 4 425 904
- US-A- 5 204 621

## Beschreibung

Die Erfindung betrifft eine Anordnung zur zweidimensionalen, berührungslosen Positionsbestimmung eines Meßobjektes mit
- einer Meßspule, welche sich parallel zu einer translatorischen Bewegungsachse des Meßobjektes erstreckt und eine an eine Wechselstromquelle angeschlossene Primärwicklung aufweist, an deren Enden zwei Sekundärwicklungen angeordnet sind, welche einen entgegengesetzten Wicklungssinn aufweisen und in Reihe geschaltet sind,
- einem axial in der Meßspule angeordneten Kern aus weichmagnetischem Material und
- einem an das Meßobjekt koppelbaren Auslöseelement zur Sättigung des Kernes an einer dem Meßobjekt benachbarten Stelle.

In DE-OS 44 25 904 ist ein magnetischer Wegsensor zur Erfassung der Lage eines Meßobjektes beschrieben, welches berührungslos entlang eines stabförmigen, mit einer über die gesamte Länge des zu erfassenden Weges reichenden Meßwicklung versehenen Magnetkerns bewegbar ist. Das Meßobjekt sättigt den Magnetkern an einer dem Meßobjekt benachbarten Stelle und erzeugt so einen virtuellen Luftspalt. An den Enden des Magnetkerns sind zwei weitere in Reihe geschaltete Spulen angeordnet, welchen eine Auswerteschaltung zur Erfassung der induzierten Differenzspannung nachgeschaltet ist, woraus die Position des Meßobjektes ableitbar ist. Eine Konstantstromquelle dient der Erregung der Meßwicklung mit einem Wechselstrom konstanter Amplitude. Der in DE-OS 44 25 904 beschriebene Wegsensor eignet sich jedoch lediglich zur Erfassung eindimensionaler Bewegungen. Um eine zweidimensionale Positionsbestimmung durchführen zu können, ist ein zweiter derartiger Sensor erforderlich, wobei mindestens einer der beiden Sensoren direkt oder über einen geeigneten Mechanismus an das Maßobjekt gekoppelt ist. Bei einer direkten Kopplung eines Sensors an das Meßobjekt sind zudem zur Übertragung der Sensorsignale zusätzliche Meßleitungen erforderlich.

Der Erfindung liegt daher das Ziel zugrunde, eine Anordnung zu schaffen, welche eine berührungslose, zweidimensionale Positionsbestimmung eines Meßobjektes unter Verwendung jeweils nur eines Auslöse- und Sensorelementes erlaubt. Außerdem soll die Auswertung und Aufbereitung der Sensorsignale auf möglichst einfache Weise zu realisieren sein.

Dieses Ziel wird erfindungsgemäß dadurch erreicht, daß das Auslöseelement zwei ortsfest zueinander angeordnete Ringmagneten aufweist, daß ein erster Ringmagnet in einem Abstand zur Spulenachse angeordnet ist, daß der erste Ringmagnet in einer Ruhelage des Auslöseelementes in einer Ebene senkrecht zur Spulenachse angeordnet ist, daß der zweite Ringmagnet einen Abstand zum ersten Ringmagneten aufweist, und daß der zweite Ringmagnet zur Erzeugung eines einseitig verbreiterten virtuellen Luftspaltes gegenüber dem ersten Ringmagneten um einen Winkel verdreht ist.

Somit ist lediglich ein Auslöseelement mit zwei Ringmagneten sowie ein aus Meßspule und axial in der Meßspule angeordnetem Kern bestehendes Sensorelement zur Schaffung eines zweidimensionalen berührungslosen Bewegungssensors erforderlich. Die erfindungsgemäße Anordnung ermöglicht eine Erfassung zweidimensionaler translatorisch-rotatorischer Bewegungen, wobei die translatorische Bewegungsachse parallel zur Spulenachse und die rotatorische Bewegungsachse entweder parallel oder senkrecht zur Spulenachse verläuft.

Die beiden Ringmagneten sind vorzugsweise in axialer oder in radialer Richtung magnetisiert. Alternativ kann lediglich einer der beiden Ringmagneten in axialer Richtung magnetisiert sein, während der andere Ringmagnet in radialer Richtung magnetisiert ist. In jedem Fall entsteht durch die räumlich voneinander abweichenden Magnetisierungsrichtungen der beiden Ringmagneten ein Magnetfeld, dessen für die Sättigung des Kernes wirksamer Bereich sich bei Drehung des Auslöseelementes innerhalb eines begrenzten Winkelbereiches verbreitert. Die Ausdehnung des virtuellen Luftspaltes verändert sich dabei lediglich in einer Richtung. Um zu gewährleisten, daß die von den beiden Ringmagneten ausgehenden, sich überlagernden Magnetfelder in der Umgebung des Sensorelementes größenordnungsmäßig ungefähr gleich große Beträge annehmen, müssen die Ringmagneten bezüglich der Magnetvolumina und der Größenverhältnisse aufeinander abgestimmt sein. Die Winkeldifferenz zwischen den Magnetisierungsrichtungen beider Ringmagneten sollte so groß sein, daß allzu starke Wechselwirkungen zwischen den Ringmagneten ausgeschlossen werden können und daß die Verbreiterung des virtuellen Luftspaltes demzufolge lediglich in einer Richtung erfolgt.

Die Wegerfassung erfolgt bei der erfindungsgemäßen Anordnung vorzugsweise durch Auswertung der an einer Sekundärwicklung induzierten Spannung, während die Winkelinformation aus der induzierten Summen- bzw. Differenzspannung zwischen den beiden Sekundärwicklungen ableitbar ist. Je nach Genauigkeitsanforderungen hinsichtlich der Weg- und Winkelerfassung kann die Winkelerfassung auch durch Auswertung der an einer Sekundärwicklung induzierten Spannung erfolgen, während die Weginformation aus der induzierten Differenzspannung gewonnen werden kann. Die durch Auswertung aus der induzierten Differenzspannung gewonnenen Meßwerte sind nämlich weniger empfindlich gegenüber etwaigen Störfeldern.

In vorteilhafter Ausgestaltung ist einer Sekundärwicklung zur Erfassung einer ersten Meßgröße ein erster Gleichrichter nachgeschaltet und der Reihenschaltung beider Sekundärwicklungen zur Erfassung einer zweiten Meßgröße ein zweiter Gleichrichter. Vorzugsweise handelt es sich bei den beiden Gleichrichtern um Spitzenwertgleichrichter, um eine möglichst hohe Güte der Meßsignale zu realisieren. Eine aufwendige Auswerteelektronik zur Aufbereitung und Auswertung der Meßergebnisse ist dadurch nicht notwendig. Alternativ zur Spitzenwertgleichrichtung ist auch eine Effektivwertgleichrichtung möglich.

Die Erregung der Primärwicklung erfolgt in einer vorteilhaften Ausgestaltung mittels eines dreieckförmigen Wechselstroms. Dies bietet den Vorteil, daß insbesondere bei Anwendungen im Kraftfahrzeugbereich niedrigere Effektivstromwerte möglich sind, um eine ausreichende Erregung der Primärwicklung zu gewährleisten.

Der Kern besteht vorzugsweise einerseits aus einem längsgestreckten Streifen aus weichmagnetischem, kristallinem Material und andererseits aus mindestens einem Streifen aus amorphem oder nanokristallinem Material. Der Streifen aus weichmagnetischem Material und die amorphen oder nanokristallinenen Streifen können auf einfache Weise durch die umgebende Primärwicklung miteinander verbunden sein. Alternativ zu den genannten Kernmaterialien ist die Verwendung von Kernen aus kunststoffgebundenem Material möglich. Alle genannten Möglichkeiten dienen der Verbesserung der Störempfindlichkeit infolge von einwirkenden Gleichfeldern. Dadurch führen selbst relativ große Gleichfelder nicht zur Sättigung des Kernes und der damit verbundenen Verschiebung des virtuellen Luftspaltes.

Um sowohl bei der translatorischen Bewegung als auch bei der rotatorischen Bewegung des Meßobjektes ausreichende Spannungshübe an den beiden Sekundärwicklungen zu ermöglichen, sollte die Frequenz des der Primärwicklung eingeprägten Wechselstroms zwischen 3 kHz und 5 kHz betragen und der Effektivwert des Wechselstroms zwischen 5 mA und 20 mA.

Die Erfindung wird nachfolgend an einem Ausführungsbeispiel anhand der Zeichnung näher erläutert. Es zeigt
Figur 1 ein Prinzipschaltbild einer erfindungsgemäßen Anordnung,
Figur 2 ein Sensor- und ein Auslöseelement einer erfindungsgemäßen Anordnung in Seitenansicht,
Figur 3 das Sensor- und das Auslöseelement gemäß Figur 2 in Draufsicht mit im Schnitt dargestelltem Sensorelement sowie
Figur 4 und 5 die Abhängigkeit der Meßsignale des Sensorelementes von der Position des Auslöseelementes.

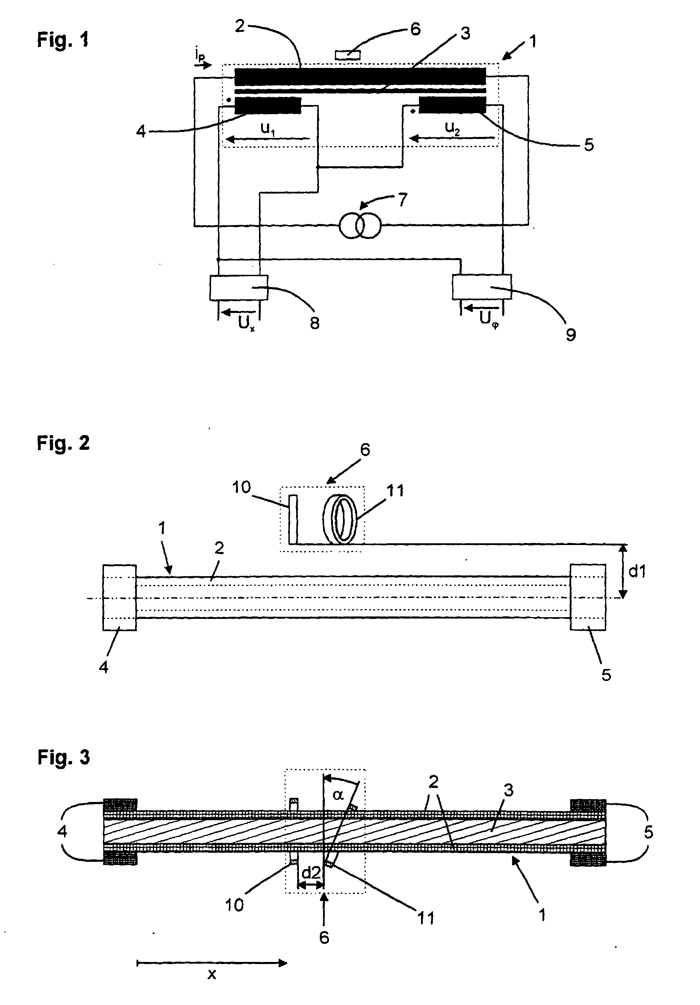

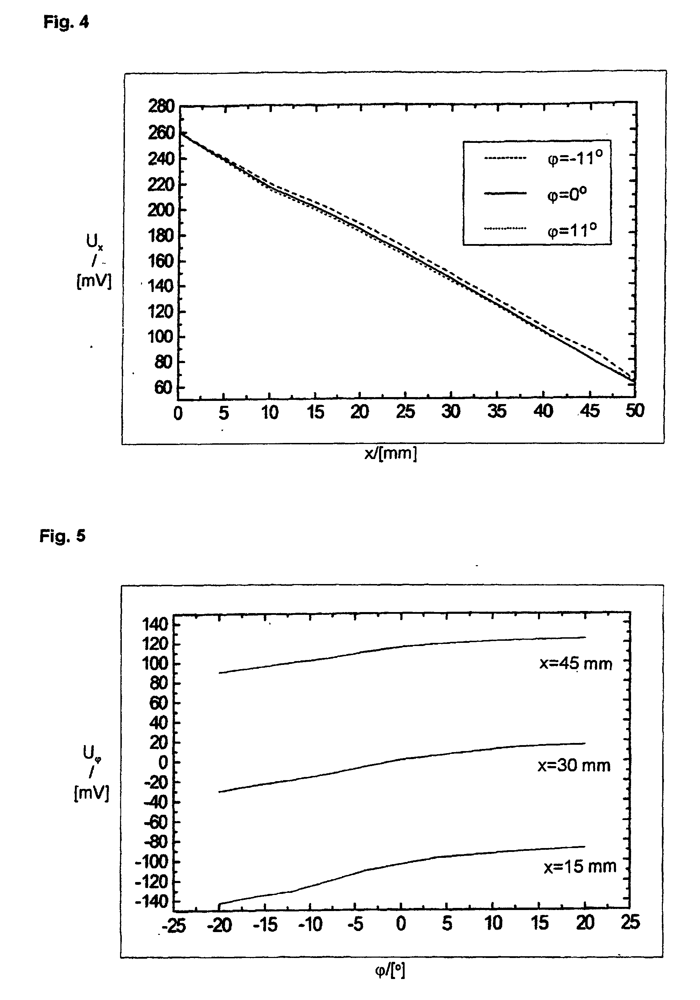

Das Prinzipschaltbild gemäß Figur 1 zeigt eine Spule 1 als Sensorelement und ein Auslöseelement 6, welches in einem axial in der Spule 1 angeordneten Kern 3 einen virtuellen Luftspalt erzeugt. Die Spule 1 weist ferner eine Primärwicklung 2, welche durch einen von einer Stromquelle 7 erzeugten Wechselstrom i_{P} erregt wird, und zwei Sekundärwicklungen 4 und 5 mit entgegengesetztem Wicklungssinn auf. Die in den Sekundärwicklungen 4 und 5 induzierten Spannungen u₁ und u₂ sind von der Lage und von der Ausdehnung des durch das Auslöseelement 6 erzeugten virtuellen Luftspaltes abhängig. Eine erste induzierte Spannung u₁ wird einem ersten Gleichrichter 8 zugeführt, welcher ausgangsseitig eine Gleichspannung Uₓ liefert, deren Betrag proportional zur Wegposition des Auslöseelementes 6 ist (Figur 4). Einem zweiten Gleichrichter 9 wird die Differenz der an den Sekundärwicklungen 4 und 5 induzierten Spannungen u₁ und u₂ zugeführt. Die Differenzbildung erfolgt durch Reihenschaltung der beiden Sekundärwicklungen 4 und 5 bei entgegengesetztem Wicklungssinn. Die gleichgerichtete Differenzspannung U_{ϕ} verhält sich in guter Näherung proportional zur Winkelposition ϕ des Auslöseelementes 6 (Figur 5). Sowohl die Translations- als auch die Rotationsachse des Auslöseelementes 6 sind im hier betrachteten Anwendungsbeispiel parallel zur Achse der Spule 1.

Anhand von Figur 2 ist ersichtlich, daß ein erster Ringmagnet 10 des Auslöseelementes 6 einen Abstand d1 zur Spulenachse aufweist. Die Spule 1 ist über ihre gesamte Länge von der Primärwicklung 2 umgeben, während die Sekundärwicklungen 4 und 5 nur an den Enden der Spule 1 angeordnet sind und dort die Primärwicklung 2 umgeben (siehe auch Figur 3).

In Figur 3 ist das aus zwei Ringmagneten 10 und 11 bestehende Auslöseelement 6 in der Draufsicht dargestellt und die Spule 1 in geschnittener Darstellung. Die Verwendung von Stabmagneten anstelle von Ringmagneten wäre prinzipiell auch möglich, allerdings nur zur Bestimmung verhältnismäßig kleiner Winkel ϕ. Die Ringmagneten 10 und 11 sind in axialer Richtung magnetisiert. Ein erster Ringmagnet 10 ist in einer Ebene senkrecht zur Achse der Spule 1 angeordnet, während der zweite Ringmagnet 11 gegenüber dem ersten Ringmagneten 10 um einen Winkel α verdreht ist und einen Abstand d2 aufweist.

Figur 4 zeigt die Abhängigkeit der Spannung Uₓ von der Wegposition x des Meßobjektes für drei unterschiedliche Winkelpositionen (ϕ=0°, ϕ=+11°, ϕ=-11°). Über den gesamten Meßbereich der Wegposition x ergibt sich ein Spannungsgefälle von 200 mV. Die Spannung Uₓ nimmt in guter Näherung linear mit wachsender Linarverschiebung x ab und ist dabei weitgehend unbeeinflußt von der Winkelposition ϕ.

Variationen der Winkelposition ϕ des Meßobjektes im Bereich von -20° bis +20° erzeugen gemäß Figur 5 bei der Spannung U_{ϕ} Spannungsveränderungen von mindestens 20 mV. Die Abhängigkeit der Spannung U_{ϕ} von der Winkelposition ϕ des Meßobjektes ist für drei unterschiedliche Wegpositionen dargestellt (x=15 mm, x=30 mm, x=45 mm). Für eine feste Wegposition x besteht in guter Näherung eine lineare Abhängigkeit zwischen Spannung U_{ϕ} und der Winkelposition ϕ. Der Einfluß der Wegposition x auf die Spannung U_{ϕ} kann beispielsweise durch Bildung eines Summensignals oder durch eine einfache unterlagerte Regelung eliminiert werden.

## Patentansprüche

1. Anordnung zur zweidimensionalen, berührungslosen Positionsbestimmung eines Meßobjektes mit
- einer Meßspule (1), welche sich parallel zu einer translatorischen Bewegungsachse (x) des Meßobjektes erstreckt und eine an eine Wechselstromquelle (7) angeschlossene Primärwicklung (2) aufweist, an deren Enden zwei Sekundärwicklungen (4, 5) angeordnet sind, welche einen entgegengesetzten Wicklungssinn aufweisen und in Reihe geschaltet sind,
- einem axial in der Meßspule (1) angeordneten Kern (3) aus weichmagnetischem Material und
- einem an das Meßobjekt koppelbaren Auslöseelement (6) zur Sättigung des Kernes (3) an einer dem Meßobjekt benachbarten Stelle,
**dadurch gekennzeichnet, daß** das Auslöseelement (6) zwei ortsfest zueinander angeordnete Ringmagneten (10, 11) aufweist, daß ein erster Ringmagnet (10) in einem Abstand (d1) zur Spulenachse angeordnet ist, daß der erste Ringmagnet (10) in einer Ruhelage des Auslöseelementes (6) in einer Ebene senkrecht zur Spulenachse angeordnet ist, daß der zweite Ringmagnet (11) einen Abstand (d2) zum ersten Ringmagneten (10) aufweist, und daß der zweite Ringmagnet (11) zur Erzeugung eines einseitig verbreiterten virtuellen Luftspaltes gegenüber dem ersten Ringmagneten (10) um einen Winkel (α) verdreht ist.

2. Anordnung nach Anspruch 1,
**dadurch gekennzeichnet, daß** die beiden Ringmagneten (10, 11) in axialer Richtung magnetisiert sind.

3. Anordnung nach Anspruch 1,
**dadurch gekennzeichnet, daß** die beiden Ringmagneten (10, 11) in radialer Richtung magnetisiert sind.

4. Anordnung nach Anspruch 1,
**dadurch gekennzeichnet, daß** der erste Ringmagnet (10) in axialer Richtung und der zweite Ringmagnet (11) in radialer Richtung magnetisiert ist.

5. Anordnung nach Anspruch 1,
**dadurch gekennzeichnet, daß** der erste Ringmagnet (10) in radialer Richtung und der zweite Ringmagnet (11) in axialer Richtung magnetisiert ist.

6. Anordnung nach einem der Ansprüche 1 bis 5,
**dadurch gekennzeichnet, daß** sich die Meßspule (1) parallel zu einer rotatorischen Bewegungsachse (ϕ) des Meßobjektes erstreckt.

7. Anordnung nach einem der Ansprüche 1 bis 5,
**dadurch gekennzeichnet, daß** sich die Meßspule (1) senkrecht zu einer rotatorischen Bewegungsachse (ϕ) des Meßobjektes erstreckt.

8. Anordnung nach einem der Ansprüche 1 bis 7,
**dadurch gekennzeichnet, daß** einer Sekundärwicklung (4) zur Erfassung einer induzierten Spannung (Uₓ) als einer ersten Meßgröße ein erster Gleichrichter (8) nachgeschaltet ist, und daß der Reihenschaltung beider Sekundärwicklungen (4, 5) zur Erfassung einer induzierten Differenzspannung (U_{ϕ}) als einer zweiten Meßgröße ein zweiter Gleichrichter (9) nachgeschaltet ist.

9. Anordnung nach Anspruch 8,
**dadurch gekennzeichnet, daß** die beiden Gleichrichter (8, 9) Mittel zur Spitzenwertgleichrichtung aufweisen.

10. Anordnung nach einem der Ansprüche 1 bis 9,
**dadurch gekennzeichnet, daß** die an die Primärwicklung (2) angeschlossene Wechselstromquelle (7) Mittel zur Erzeugung eines dreieckförmigen Wechselstroms (i_{P}) aufweist.

11. Anordnung nach einem der Ansprüche 1 bis 10,
**dadurch gekennzeichnet, daß** der Kern (3) einerseits aus einem längsgestreckten Streifen aus weichmagnetischem, kristallinem Material und andererseits aus mindestens einem Streifen aus amorphem Material besteht.

12. Anordnung nach einem der Ansprüche 1 bis 10,
**dadurch gekennzeichnet, daß** der Kern (3) einerseits aus einem längsgestreckten Streifen aus weichmagnetischem, kristallinem Material und andererseits aus mindestens einem Streifen aus nanokristallinem Material besteht.

13. Anordnung nach einem der Ansprüche 1 bis 10,
**dadurch gekennzeichnet, daß** der Kern (3) aus kunststoffgebundenem Material besteht.

14. Anordnung nach einem der Ansprüche 1 bis 13,
**dadurch gekennzeichnet, daß** die Frequenz des der Primärwicklung (2) eingeprägten Wechselstroms (i_{P}) zwischen 3 kHz und 5 kHz beträgt.

15. Anordnung nach einem der Ansprüche 1 bis 14,
**dadurch gekennzeichnet, daß** der Effektivwert des der Primärwicklung (2) eingeprägten Wechselstroms (i_{P}) zwischen 5 mA und 20 mA beträgt.

## Claims

1. An arrangement for two-dimensional, contactless determination of the position of a test object, having
a measuring coil (1), which extends parallel to an axis of translational motion (x) of the test object and comprises a primary winding (2) connected to an alternating current source (7), at the ends of which primary winding there are arranged two secondary windings (4, 5), wound in the opposite direction and connected in series,
a core (3) of soft-magnetic material arranged axially in the measuring coil (1) and
a tripping element (6) couplable to the test object for saturating the core (3) at a location adjacent the test object,
**characterised in that** the tripping element (6) comprises two ring magnets (10, 11) arranged stationarily relative to one another, **in that** a first ring magnet (10) is arranged at a distance (d1) from the coil axis, **in that** the first ring magnet (10) is arranged in a plane perpendicular to the coil axis when the tripping element (6) is in a rest position, **in that** the second ring magnet (11) exhibits a distance (d2) from the first ring magnet (10), and **in that** the second ring magnet (11) is rotated by an angle (α) relative to the first ring magnet (10) to generate a unilaterally widened virtual air gap.

2. An arrangement according to claim 1, **characterised in that** the two ring magnets (10, 11) are axially magnetised.

3. An arrangement according to claim 1, **characterised in that** the two ring magnets (10, 11) are radially magnetised.

4. An arrangement according to claim 1, **characterised in that** the first ring magnet (10) is axially magnetised and the second ring magnet (11) is radially magnetised.

5. An arrangement according to claim 1, **characterised in that** the first ring magnet (10) is radially magnetised and the second ring magnet (11) is axially magnetised.

6. An arrangement according to one of claims 1 to 5, **characterised in that** the measuring coil (1) extends parallel to an axis of rotatory motion (ϕ) of the test object.

7. An arrangement according to one of claims 1 to 5, **characterised in that** the measuring coil (1) extends perpendicularly to an axis of rotatory motion (ϕ) of the test object.

8. An arrangement according to one of claims 1 to 7, **characterised in that** a first rectifier (8) is connected downstream of a secondary winding (4) for detecting an induced voltage (Uₓ) as a first measured variable and **in that** a secondary rectifier (9) is connected downstream of the series connection of the two secondary windings (4, 5) for detecting an induced difference voltage (U_{ϕ}) as a second measured variable.

9. An arrangement according to claim 8, **characterised in that** the two rectifiers (8, 9) comprise means for peak value rectification.

10. An arrangement according to one of claims 1 to 9, **characterised in that** the alternating current source (7) connected to the primary winding (2) comprises means for generating a triangular alternating current (iₚ).

11. An arrangement according to one of claims 1 to 10, **characterised in that** the core (3) consists on the one hand of an elongate strip of soft-magnetic, crystalline material and on the other hand of at least one strip of amorphous material.

12. An arrangement according to one of claims 1 to 10, **characterised in that** the core (3) consists on the one hand of an elongate strip of soft-magnetic, crystalline material and on the other hand of at least one strip of nanocrystalline material.

13. An arrangement according to one of claims 1 to 10, **characterised in that** the core (3) consists of plastics-bound material.

14. An arrangement according to one of claims 1 to 13, **characterised in that** the frequency of the alternating current (iₚ) applied to the primary winding (2) amounts to between 3 kHz and 5 kHz.

15. An arrangement according to one of claims 1 to 14, **characterised in that** the root-mean-square value of the alternating current (iₚ) applied to the primary winding (2) amounts to between 5 mA and 20 mA.

## Revendications

1. Dispositif pour la détermination bidimensionnelle et sans contact de la position d'un objet de mesure, comportant
une bobine de mesure (1), s'étendant parallèlement à un axe de déplacement par translation (x) de l'objet de mesure et comportant un enroulement primaire (2) raccordé à une source de courant alternatif (7), dont les extrémités comportant deux enroulements secondaires (4, 5), présentant un sens d'enroulement opposé et montés en série,
un noyau (3) agencé axialement dans la bobine de mesure (3), composé d'un matériau magnétique doux, et
un élément de déclenchement(6) pouvant être couplé sur l'objet de mesure en vue de la saturation du noyau (3) en un emplacement proche de l'objet de mesure,
**caractérisé en ce que** l'élément de déclenchement (6) comporte deux aimants toriques (10, 11) à agencement local fixe, un premier aimant torique (10) étant agencé à une distance (d1) de l'axe de la bobine, le premier aimant torique (10) étant agencé dans une position de repos de l'élément de déclenchement (6) dans un plan perpendiculaire à l'axe de la bobine, le deuxième aimant torique (11) étant espacé d'une distance (d2) du premier aimant torique (10) et le deuxième aimant torique (11) étant tourné à un angle (α) par rapport au premier aimant torique (10) en vue de l'établissement d'un entrefer virtuel à agrandissement unilatéral.

2. Dispositif selon la revendication 1, **caractérisé en ce que** les deux aimants toriques (10, 11) sont magnétisés dans la direction axiale.

3. Dispositif selon la revendication 1, **caractérisé en ce que** les deux aimants toriques (10, 11) sont magnétisés dans la direction radiale.

4. Dispositif selon la revendication 1, **caractérisé en ce que** le premier aimant torique (10) est magnétisé dans la direction axiale, le deuxième aimant torique (11) étant magnétisé dans la direction radiale.

5. Dispositif selon la revendication 1, **caractérisé en ce que** le premier aimant torique (10) est magnétisé dans la direction radiale, le deuxième aimant torique (11) étant magnétisé dans la direction axiale.

6. Dispositif selon l'une des revendications 1 à 5, **caractérisé en ce que** la bobine de mesure (1) s'étend parallèlement à l'axe de rotation (ϕ) de l'objet de mesure.

7. Dispositif selon l'une des revendications 1 à 5, **caractérisé en ce que** la bobine de mesure (1) s'étend perpendiculairement à l'axe de rotation (ϕ) de l'objet de mesure.

8. Dispositif selon l'une des revendications 1 à 7, **caractérisé en ce qu'**un premier redresseur (8) est agencé en aval d'un enroulement secondaire (4) destiné à la détection d'une tension induite (Uₓ), constituant une première valeur de mesure, un deuxième redresseur (9) étant agencé en aval des deux enroulements secondaires (4, 5) montés en série en vue de la détection d'une tension différentielle induite (U_{ϕ}) constituant une deuxième valeur de mesure.

9. Dispositif selon la revendication 8, **caractérisé en ce que** les deux redresseurs (8, 9) comportent des moyens pour le redressement des valeurs de crête.

10. Dispositif selon l'une des revendications 1 à 9, **caractérisé en ce que** la source de courant alternatif (7) raccordée à l'enroulement primaire (2) comporte des moyens pour produire un courant alternatif triangulaire (iₚ).

11. Dispositif selon les revendications 1 à 10, **caractérisé en ce que** le noyau (3) est composé d'une part d'une bande à extension longitudinale de matériau cristallin magnétique doux et d'autre part d'au moins une bande de matériau amorphe.

12. Dispositif selon l'une des revendications 1 à 10, **caractérisé en ce que** le noyau (3) est composé d'une part d'une bande à extension longitudinale de matériau cristallin magnétique doux et d'autre part d'au moins une bande de matériau nano-cristallin.

13. Dispositif selon l'une des revendications 1 à 10, **caractérisé en ce que** le noyau (3) est composé de matériau à base de plastique.

14. Dispositif selon l'une des revendications 1 à 13, **caractérisé en ce que** la fréquence du courant alternatif (iₚ) de l'enroulement primaire (2) est comprise entre 3 kHz et 5 kHz.

15. Dispositif selon l'une des revendications 1 à 14, **caractérisé en ce que** la valeur effective du courant alternatif (iₚ) de l'enroulement primaire (2) est comprise entre 5 mA et 20 mA.
